# EUROPÄISCHE PATENTSCHRIFT

(11) **EP 2 461 048 B1**
(45) Veröffentlichungstag und Bekanntmachung des Hinweises auf die Patenterteilung: **25.11.2015**
(21) Anmeldenummer: 11191256.4
(22) Anmeldetag: 30.11.2011
(51) Int. Cl.: F16B 11/00, B60Q 1/04

(54) **Vorrichtung zur Befestigung eines Bauteils an einem Karosserieteil eines Kraftfahrzeuges**
Device for fixing a component on a bodywork section of a motor vehicle
Dispositif destiné à la fixation d'un composant sur une pièce de carrosserie d'un véhicule automobile

(30) Priorität: 02.12.2010 DE 102010060984
(43) Veröffentlichungstag der Anmeldung: 06.06.2012
(73) Patentinhaber: HBPO GmbH, 59552 Lippstadt (DE)
(72) Erfinder: Schöning, Ralf, 33442 Herzebrock-Clarholz (DE); Opperbeck, Guido, 59558 Lippstadt (DE); Schmidt, Ralf, 59302 Oelde (DE)
(74) Vertreter: Vogel, Andreas

(56) Entgegenhaltungen:
- WO-A1-2004/065171
- DE-A1-102009 019 730
- FR-A1- 2 564 537

## Beschreibung

Die Erfindung betrifft eine Vorrichtung zur Befestigung eines Bauteils an ein Karosserieteil eines Kraftfahrzeuges, mit mehreren Fügepartnern, die über ein Klebemedium miteinander befestigt sind, wobei das Klebemedium in mindestens zwei Zustände bringbar ist, in einem ersten Zustand das Klebemedium eine Justierung des Bauteils am Karosserieteil zulässt, und über Mittel der Wechsel vom ersten Zustand in einen zweiten Zustand aktivierbar ist, wobei im zweiten Zustand das Klebemedium ausgehärtet ist, wodurch eine Fixierung des Bauteils am Karosserieteil erzielbar ist. Zudem betrifft die Erfindung ein Verfahren zur Befestigung des genannten Bauteils an ein Karosserieteil.

In der DE 10 2009 019 730 A1 ist ein Frontendmodul für Fahrzeuge offenbart, das eine Haltevorrichtung mit einer Aufnahmestruktur aufweist, an der mindestens ein Klebeelement angeordnet ist, das in mindestens zwei Zustände bringbar ist. In einem ersten Zustand ermöglicht das Klebeelement eine Justierung einer Leuchteinheit des Frontendmoduls. Über Mittel ist zudem der Wechsel vom ersten Zustand in einen zweiten Zustand aktivierbar, wobei im zweiten Zustand das Klebeelement ausgehärtet ist, wodurch eine Fixierung der Leuchteinheit erzielbar ist. Vorteilhafterweise kann die Leuchteinheit im ersten Zustand des Klebeelementes in alle wesentlichen Richtungen (X, Y, Z-Richtung) justiert werden. Hierdurch können Montagetoleranzen über diesen zentralen Toleranzausgleich ausgeglichen werden. Nachteiligerweise ist bei diesem, bekannten zentralen Toleranzausgleich ein recht hohes Volumen bezogen auf das Klebemedium notwendig. Die Folge ist unter anderem, dass die Aushärtezeit des Klebemediums aufgrund des großen Volumens relativ hoch sein kann.

Aus der FR 2 564 537 A1 ist ebenfalls eine Vorrichtung zur Befestigung eines Bauteiles an ein Karosserieteil eines Kraftfahrzeuges bekannt, bei der die Vorrichtung mehrere Fügepartner aufweist, die über einen Kleber miteinander befestigt werden. Auch hier können die Bauteile in den jeweiligen Achsen justiert und somit Toleranzen ausgeglichen werden. Nachteilig bei dieser Erfindung ist unter anderem allerdings, dass der Kleber nicht unmittelbar aktivierbar ist und somit eine Justierung der Bauteile erschwert wird.

Aufgabe der vorliegenden Erfindung ist es, eine Vorrichtung zur Befestigung eines Bauteils an ein Karosserieteil eines Kraftfahrzeuges zu schaffen, bei der die oben genannten Nachteile vermieden werden, insbesondere eine Vorrichtung bereitgestellt wird, die ein geringes Klebemediumvolumen benötigt, wobei gleichzeitig eine optimale Justierung des Bauteils an dem Karosserieteil möglich ist.

Zur Lösung dieser Aufgabe wird eine Vorrichtung mit sämtlichen Merkmalen des Anspruches 1 vorgeschlagen. In den abhängigen Ansprüchen sind bevorzugte Weiterbildungen ausgeführt.

Erfindungsgemäß sind mindestens zwei voneinander unabhängige Kammern vorgesehen, in denen das Klebemedium sich befindet. Hierbei ist eine erste Kammer zur Justierung des Bauteils in mindestens eine erste Richtung vorgesehen und eine zweite Kammer dient zur Justierung des Bauteils in mindestens eine weitere Richtung, die sich von der ersten Richtung unterscheidet. Erfindungsgemäß wird somit ein dezentraler Toleranzausgleich für das Bauteil geschaffen. In der ersten Kammer kann das Bauteil bezogen auf die erste Richtung entsprechend justiert werden, wobei gleichzeitig oder nacheinander eine Ausrichtung des Bauteils in der zweiten Kammer in die zweite Richtung erfolgen kann. Die erste Kammer und die zweite Kammer sind in ihrem Volumen gering gehalten, so dass folglicherweise das Klebemedium gering gehalten werden kann. Vorteilhafterweise kann die Aushärtezeit des Klebemediums beim Wechsel in den zweiten Zustand wesentlich reduziert werden.

Besonders vorteilhaft ist, dass die erste Kammer zur Justierung des Bauteils in eine erste Richtung (X) und eine zweite Richtung (Y) dient. Folglich kann das Bauteil zum Karosserieteil bezogen auf alle sechs Freiheitsgrade ausgerichtet werden. Die Aushärtezeit kann durch die Erfindung wesentlich beschleunigt werden, wobei das Bauteil im zweiten Zustand des Klebemediums seine Endmontageposition erreicht hat. Eine endgültige Fixierung des Bauteils am Kraftfahrzeug ist somit erreicht.

Zweckdienlich kann sein, wenn die Mittel als externe Mittel ausgeführt sind, die für einen Zustandswechsel des Klebemediums dienen. Die externen Mittel können Energie sein, die über eine Veränderung der Umgebungsbedingungen den Wechsel vom ersten Zustand in den zweiten Zustand aktivieren. Dies kann beispielsweise durch Temperaturerhöhung, Zutritt von Licht, Schall, Luftfeuchtigkeit oder Ausschluss von Luftsauerstoff bezogen auf die Kammer und auf das Klebemedium erfolgen. Besonders vorteilhaft ist, dass der Wechsel vom ersten Zustand in den zweiten Zustand des Klebemediums ohne großen Aufwand erfolgt. Befindet sich das Bauteil in der gewünschten, bereits justierten Position am Kraftfahrzeug, müssen beispielsweise nicht zusätzliche mechanische Befestigungselemente, wie beispielsweise Schrauben etc. am Bauteil entsprechend fixiert werden. Das Klebemedium muss lediglich in seinen zweiten Zustand gebracht werden, wobei im zweiten Zustand das Klebemedium nahezu oder komplett ausgehärtet ist und somit die endgültige Fixierung des Bauteils am Karosserieteil des Kraftfahrzeuges sicherstellt.

Vorteilhafterweise können die Fügepartner aus einem Basiselement, einem Zwischenelement und einem Anschlusselement sich zusammensetzen, wobei das Anschlusselement das Bauteil aufweist, die erste Kammer zumindest teilweise durch das Zwischenelement und das Basiselement begrenzt ist, sowie die zweite Kammer durch das Anschlusselement und das Zwischenelement begrenzt ist. Hierbei ist das Basiselement sowie das Zwischenelement derart geometrisch ausgeführt, dass das Anschlusselement mit dem Zwischenelement in der ersten Kammer in eine erste Richtung und/oder eine zweite Richtung justiert werden kann. Gleichzeitig ist das Zwischenelement derart geometrisch ausgeführt, dass das Anschlusselement in der zweiten Kammer leichtgängig bewegt werden kann, um eine Justierung des Bauteils in die dritte Richtung (Z) zu ermöglichen.

Nach einer bevorzugten Ausführungsform kann das Zwischenelement zumindest bereichsweise das Anschlusselement umfassen, insbesondere kann das Zwischenelement an seiner dem Anschlusselement zugewandten Seite hülsenartig mit einer Wandung und mit einem Innenraum ausgeführt sein, in dem das Anschlusselement im ersten Zustand des Klebemediums linear beweglich gelagert ist. Die hülsenartige Ausführungsform des Zwischenelementes kann unterschiedliche Geometrien aufweisen, beispielsweise kann das Zwischenelement in diesem Bereich einen Sechskant, Polygon etc. bilden.

Des Weiteren kann vorgesehen sein, dass die zweite Kammer durch die Wandung des Zwischenelementes und die Kontur des Anschlusselementes bestimmt ist. Hierbei kann das Zwischenelement mit seiner dem Basiselement zugewandten Seite in einen zweiten Innenraum ragen, in dem sich gleichzeitig die erste Kammer befindet.

Ebenfalls ist es denkbar, dass der zweite Innenraum, in dem sich gleichzeitig die erste Kammer befindet, geschlossen ist, damit beispielsweise keine Beeinflussung durch Schmutzpartikel, Staub, Feuchtigkeit, Licht etc. von Außen der ersten Kammer erfolgt. Vorteilhafterweise weist das Zwischenelement ein Kappenelement auf, das am Basiselement gleichzeitig angeordnet ist. Die Befestigung kann hierbei form- und/oder kraft- und/oder stoffschlüssig erfolgen. In einer möglichen Ausführungsform der Erfindung ist das Kappenelement über ein Gewinde am Basiselement aufgeschraubt. Ferner ist es denkbar, dass eine Rastverbindung zwischen dem Kappenelement und dem Basiselement vorliegt. Das Kappenelement begrenzt zum Einen den zweiten Innenraum. Zum Anderen kann das Kappenelement gleichzeitig verhindern, dass das Zwischenelement aus dem zweiten Innenraum ungewollt entfernt oder herausgezogen wird. Das Kappenelement kann hülsenartig das Basiselement zumindest bereichsweise umfassen.

Vorteilhafterweise kann vorgesehen sein, dass das Anschlusselement und/oder das Basiselement und/oder das Zwischenelement einen Kanal aufweisen, durch den das Klebemedium in die erste und/oder die zweite Kammer leitbar ist. In der Regel wird für die erste und die zweite Kammer das gleiche Klebmedium verwendet. Ebenfalls ist es denkbar, dass unterschiedliche Klebemedien in die erste und die zweite Kammer eingebracht werden. Zweckmäßigerweise ist außerhalb der Vorrichtung eine Dosiereinheit vorgesehen, die die Menge des Klebemediums vorbestimmt, die in beide Kammern über die Kanäle einzubringen ist.

In einer weiteren Ausführungsform der Erfindung ist es denkbar, dass das Zwischenelement an seiner dem Basiselement zugewandten Seite einen Kanal aufweist, wobei insbesondere der zweite Kanal am Basiselement vorgesehen ist, so dass eine Befüllung der ersten Kammer und der zweiten Kammer über die Kanäle des Basiselementes und des Zwischenelementes erfolgt. Somit ist es möglich, dass eine Befüllung des Klebemediums nur von der Seite des Basiselementes erfolgt, wodurch der gesamte Befestigungsprozess sowie die Fixierung des Bauteils am Karosserieteil vereinfacht wird.

Nach einer Weiterbildung der Erfindung kann das Kappenelement und das Zwischenelement ein monolithisches Bauteil bilden und/oder kann das Bauteil zur Befestigung an der Karosserie und das Anschlusselement ein monolithisches Bauteil bilden. Zudem kann das Basiselement und die Karosserie ein monolithisches Bauteil bilden. Vorteilhafterweise können die Fügepartner derart ausgeführt sein, dass eine translatorische und eine rotatorische Bewegung des zu befestigenden Bauteils im ersten Zustand des Klebemediums möglich sind.

In einer die Erfindung verbessernden Maßnahme kann vorgesehen sein, dass das Basiselement und/oder die dem Basiselement zugewandte Seite des Zwischenelementes einen metallischen Wärmewiderstand aufweist. Zweckmäßigerweise sind Leitungen vorgesehen, die zum Wärmewiderstand führen, wobei im Außenbereich der Vorrichtung Anschlussmöglichkeiten an den Leitungen vorzufinden sind. Über die Einbringung von Wärme über den metallischen Wärmewiderstand in die erste Kammer erfolgt ein Zustandswechsel des Klebemediums. Der metallische Wärmewiderstand kann sowohl an der Oberfläche des Basiselementes oder des Zwischenelementes angeordnet sein. Ebenfalls ist es denkbar, dass innerhalb des Materials des Basiselementes oder des Zwischenelementes der metallische Wärmewiderstand eingebettet ist. Möglich ist, dass der Wärmewiderstand aus einer Vielzahl an kleinsten metallischen Partikeln gebildet ist.

In einer möglichen Ausführungsform der Erfindung weist der Wärmewiderstand eine Vielzahl von Öffnungen auf, in die zumindest bereichsweise das Material des Basiselementes und/oder des Zwischenelementes hineinragt, wodurch eine zuverlässige Befestigung des Wärmewiderstandes in der ersten Kammer gewährleistet ist. Bei dieser Ausführungsform ist der Wärmewiderstand formschlüssig in der ersten Kammer durch das Basiselement und/oder das Zwischenelement gehalten.

Ebenfalls ist denkbar, dass die zweite Kammer einen Wärmewiderstand aufweist, um in der zweiten Kammer einen entsprechenden Wärmeeintrag zu ermöglichen, damit das Klebemedium in den zweiten Zustand wechseln kann.

Vorteilhafterweise kann das Anschlusselement über Gelenkmittel am Zwischenelement gelagert sein, wodurch im ersten Zustand des Klebemediums eine geringe Nachjustierung in die erste und die zweite Richtung möglich ist. Das Gelenkmittel kann beispielsweise ein Kugelgelenk sein. Zusätzlich und/oder alternativ kann ein Gelenkmittel am Zwischenelement vorgesehen sein, um ebenfalls eine Nachjustierung durchführen zu können.

Ebenfalls ist es denkbar, dass die dem Basiselement zugewandte Seite des Zwischenelementes eine scheibenartige oder tellerartige Grundform aufweist, die einen geringen Abstand zum Basiselement aufweist, wobei zwischen dem Basiselement und der dem Basiselement zugewandten Seite des Zwischenelementes die erste Kammer sich befindet, wobei insbesondere die dem Basiselement zugewandte Seite des Zwischenelementes mehrere Sektionen aufweist, in denen das Klebemedium sich befindet. Hierdurch wird erreicht, dass ein geringes Volumen für das Klebemedium in der ersten Kammer benötigt wird, wodurch die Aushärtezeit des Klebemediums in der ersten Kammer gering gehalten werden kann.

Zudem kann ein Sicherungselement vorgesehen sein, das derart am Zwischenelement angeordnet ist, dass das Anschlusselement verliersicher am Zwischenelement gehalten ist.

Vorteilhafterweise ist über das Anschlusselement und/oder das Zwischenelement Wärme in das Klebemedium leitbar, wobei insbesondere das Anschlusselement und/oder das Zwischenelement aus einem Metall besteht.

Das zu befestigende Bauteil kann beispielsweise ein Frontendmodul gemäß der DE 10 2009 019 730.3 sein. Alternativ kann das zu befestigende Bauteil ein jegliches Bauteil am Kraftfahrzeug sein, welches außerhalb oder innerhalb des Kraftfahrzeuges zu befestigen ist. Zum Beispiel kann das zu befestigende Bauteil ein innerhalb des Kraftfahrzeuges angeordnetes Cockpit sein. Aufgrund der zum Teil hohen Fertigungstoleranzen begünstigt die vorliegende Erfindung, dass über eine entsprechende Justierung des zu befestigenden Bauteils ein sauberes Fugenbild zu den anliegenden Bauteilen, Karosserieteilen, Kotflügel, Stoßfängeraußenkante, Motorhaube etc. entsteht.

Des Weiteren wird die genannte Aufgabe durch ein Verfahren zur Befestigung eines Bauteils an einem Karosserieteil gemäß aller Merkmale des unabhängigen Verfahrensanspruches gelöst. Weitere Ausführungsformen des Verfahrens sind in den weiteren Unteransprüchen entsprechend angegeben.

Der besondere Vorteil des erfindungsgemäßen Verfahrens besteht darin, dass der Montageaufwand reduziert werden kann. Zum Einen kann eine zügige Justierung des zu befestigenden Bauteils im ersten Zustand des Klebemediums am Karosserieteil erreicht werden. Zum Anderen ist eine sichere Fixierung des zu befestigenden Bauteils erzielbar, wenn nach der Justierung des zu befestigenden Bauteils die Endmontageposition erreicht ist. Die endgültige Fixierung erfolgt lediglich über Mittel, die einen Wechsel vom ersten Zustand in den zweiten Zustand des Klebemediums auslösen.

Vorteilhafterweise dauert der Wechsel vom ersten Zustand in den zweiten Zustand des Klebemediums weniger als 60 Sekunden, bevorzugt weniger als 40 Sekunden.

Nach einer bevorzugten Ausführungsform des erfindungsgemäßen Verfahrens ist eine Saugvorrichtung zum Justieren des zu befestigenden Bauteils und/oder während des Wechsels vom ersten in den zweiten Zustand des Klebemediums vorgesehen, die das zu befestigende Bauteil kontaktiert. Der Roboter oder der Werker kann über die Saugvorrichtung eine entsprechende Justierung des zu befestigenden Bauteils vornehmen. Ebenfalls kann über eine Positionsfixierung der Saugvorrichtung das zu befestigende Bauteil während des Aushärtevorganges des Klebemediums in der gewünschten Endmontageposition gehalten werden. Der Bewegungsweg bei der Justierung kann vorzugsweise bis zu 3 mm, besonders bevorzugt bis zu 10 mm betragen, wodurch Fertigungstoleranzen am Kraftfahrzeug zuverlässig ausgeglichen werden können.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung der erfindungsgemäßen Vorrichtung in Schnittansicht,
- Fig. 2: eine weitere Alternative der erfindungsgemäßen Vorrichtung in Schnittansicht,
- Fig. 3: eine weitere Alternative der erfindungsgemäßen Vorrichtung in Explosionsdarstellung,
- Fig. 4: die in Figur 3 gezeigte Vorrichtung in Schnittansicht,
- Fig. 5: eine weitere Alternative der erfindungsgemäßen Vorrichtung in Explosionsdarstellung,
- Fig. 6: die in Figur 5 gezeigte Vorrichtung in Schnittansicht,
- Fig. 7: eine weitere Alternative der erfindungsgemäßen Vorrichtung in Explosionsdarstellung,
- Fig. 8: die in Figur 7 gezeigte Vorrichtung in Schnittansicht,
- Fig. 9: ein weiteres Ausführungsbeispiel der erfindungsgemäßen Vorrichtung in Explosionsdarstellung,
- Fig. 10: eine weitere Ausführungsalternative der erfindungsgemäßen Vorrichtung und
- Fig. 11: eine weitere Ausführungsalternative der erfindungsgemäßen Vorrichtung.

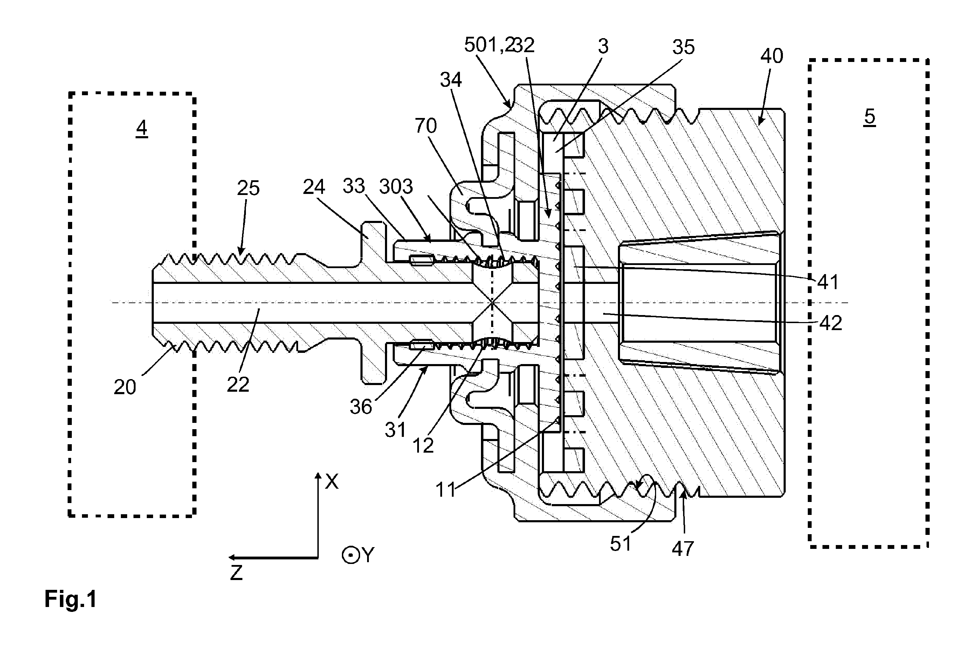

Figur 1 sowie alle weiteren Ausführungsbeispiele zeigen ein schematisch dargestellten Bauteil 4, welches an einem Karosserieteil 5 (ebenfalls schematisch gezeigt) eines Kraftfahrzeuges zu befestigen ist. Um dies zu erreichen, sind mehrere Fügepartner 20, 30, 40 vorgesehen. Zudem setzen sich die Fügepartner 20, 30, 40 aus einem Basiselement 40, einem Zwischenelement 30 und einem Anschlusselement 20 zusammen. Das Anschlusselement 20 ist am Bauteil 4 befestigbar. Das Basiselement 40 hingegen ist am Karosserieteil 5 angeordnet. Das Zwischenelement 30 befindet sich zwischen dem Anschlusselement 20 und dem Basiselement 40. Das Zwischenelement 30 umfasst mit seinem linken Bereich zumindest bereichsweise das Anschlusselement 20. Wie in Figur 1 als auch in den übrigen Ausführungsbeispielen zu erkennen ist, ist das Zwischenelement 30 an seiner dem Anschlusselement 20 zugewandten Seite 31 hülsenartig mit einer Wandung 33 ausgeführt. Innerhalb der Wandung 33 befindet sich ein Innenraum 34, in dem das Anschlusselement 20 sich befindet.

Die Fügepartner 20, 30, 40 können über ein Klebmedium 3 miteinander befestigt werden. Das Klebemedium 3 ist hierbei mindestens in zwei Zustände 1, 2 bringbar. In einem ersten Zustand 1 kann das Klebemedium 3 eine Justierung des Bauteils 4 am Karosserieteil 5 zulassen. Die Erfindung sieht vor, dass über Mittel der Wechsel vom ersten Zustand 1 in einen zweiten Zustand 2 aktivierbar ist, wobei im zweiten Zustand 2 das Klebemedium 3 ausgehärtet ist, wodurch eine Fixierung des Bauteils 4 am Karosserieteil 5 erzielt wird. Hierfür sind zwei Kammern 11, 12 vorgesehen, in denen das Klebemedium 3 sich befindet. Die erste Kammer 11 dient zur Justierung des Bauteils 4 in X-Richtung und Y-Richtung. Die zweite Kammer 12 dient zur Justierung des Bauteils 4 in Z-Richtung. In den vorliegenden Ausführungsbeispielen gemäß Figur 1 bis Figur 11 ist die zweite Kammer 12 durch die Wandung 33 des Zwischenelementes 30 und durch die Kontur des Anschlusselementes 20 bestimmt.

Das Zwischenelement 30 mit seiner dem Basiselement 40 zugewandten Seite 32 ragt in einen zweiten Innenraum 35, in dem sich gleichzeitig die Kammer 12 befindet. Der zweite Innenraum 35 ist geschlossen und auch der erste Innenraum 34, in dem sich die zweite Kammer 12 befindet, ist geschlossen, da eine Dichtung 36 innenseitig der Wandung 33 angeordnet ist.

Zudem weist das Zwischenelement 30 ein Kappenelement 50 auf, das zu einer Seite am Basiselement 40 befestigt ist. Im vorliegenden Ausführungsbeispiel gemäß Figur 1 wird das Kappenelement 50 über ein Gewinde 51 auf das Basiselement 40 aufgeschraubt. Das Kappenelement 50 ist über ein Verbindungsstück 70 mit dem Zwischenelement 30 verbunden. Es ist ebenfalls denkbar, dass das Verbindungsstück 70 mit dem Kappenelement 50 und/oder dem Zwischenelement 30 ein monolithisches Bauteil bildet. Das Verbindungsstück 70 stellt eine Dichtung dar, um einen etwaigen Austritt des Klebemediums 3 aus der ersten Kammer 11 in die Umgebung zu verhindern. Wie Figur 1 verdeutlicht, verhindert der Bereich des Zwischenelementes 30, der sich im zweiten Innenraum 35 befindet, dass das Klebemedium 3 aus der ersten Kammer 11 entweicht.

Das Basiselement 40 weist an der ersten Kammer 11 eine Induktionsplatte 41 als Wärmewiderstand auf, wodurch über Mittel von Außen Wärme in den zweiten Innenraum 35 beziehungsweise in die erste Kammer 11 eingebracht werden kann. Über Induktion kann ebenfalls die zweite Kammer 12 erwärmt werden. Das Anschlusselement 20 sowie das Zwischenelement 30 sind aus einem metallischen Material ausgeführt. Über die Erwärmung des Klebemediums 3 erfolgt ein Zustandswechsel des Klebemediums 3 in seinen zweiten Zustand 2, wodurch eine Fixierung des Zwischenelementes 30 am Basiselement 40 erzielt wird. Gleichzeitig erfolgt eine Fixierung des Anschlusselementes 20 am Zwischenelement 30. Somit kann eine entsprechende Fixierung des Bauteils 4 am Karosserieteil 5 bewirkt werden.

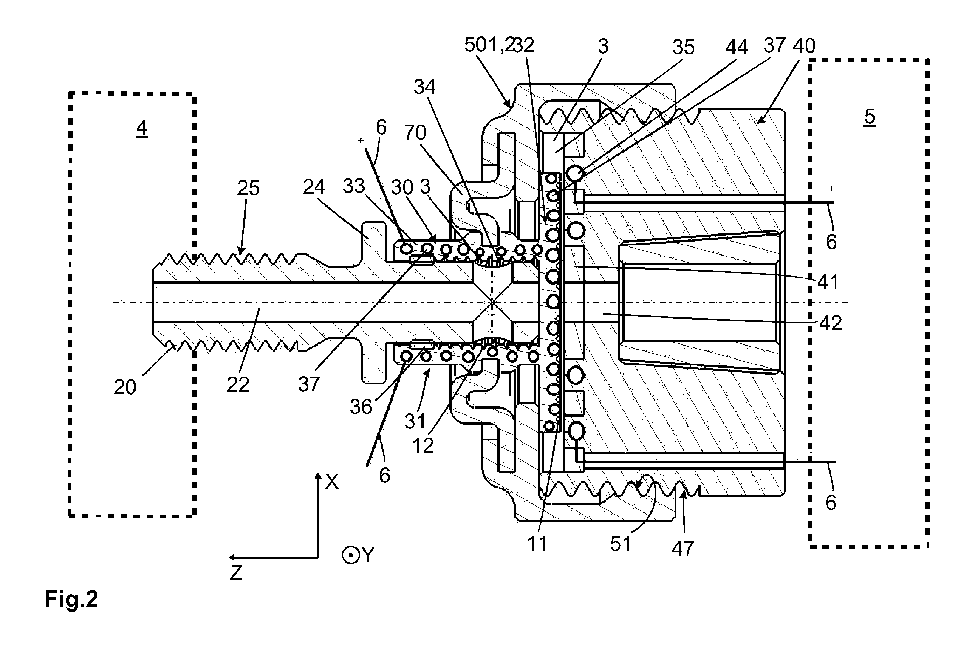

Figur 2 entspricht im Wesentlichen der Vorrichtung aus Figur 1, wobei im Gegensatz zu Figur 1 der Energieeintrag in die erste Kammer 11 und in die zweite Kammer 12 über zwei Heizdrähte 6 von Außen erfolgt. Das Zwischenelement 30 ist mit einer Heizspirale 37 im Bereich der Wandung 33 ausgeführt. Des Weiteren weist das Zwischenelement 30 an seiner Seite 32, die dem Basiselement 40 zugewandt ist und innerhalb des zweiten Innenraumes 35 sich befindet, ebenfalls eine Heizspirale 37 auf. Alternativ und/oder zusätzlich kann das Basiselement 40 ebenfalls mit einer Heizspirale 44 ausgeführt sein, um einen entsprechenden Wärmeeintrag in die erste Kammer 11 zu erzielen. Über den Wärmeeintrag kann eine Zustandsänderung des Klebemediums 3 in der ersten Kammer 11 und der zweiten Kammer 12 erfolgen.

Damit das Klebemedium 3 in die erste Kammer 11 und die zweite Kammer 12 gemäß aller Ausführungsbeispiele gelangen kann, ist jeweils ein Kanal 22, 42 im Anschlusselement 20 und Basiselement 40 vorgesehen.

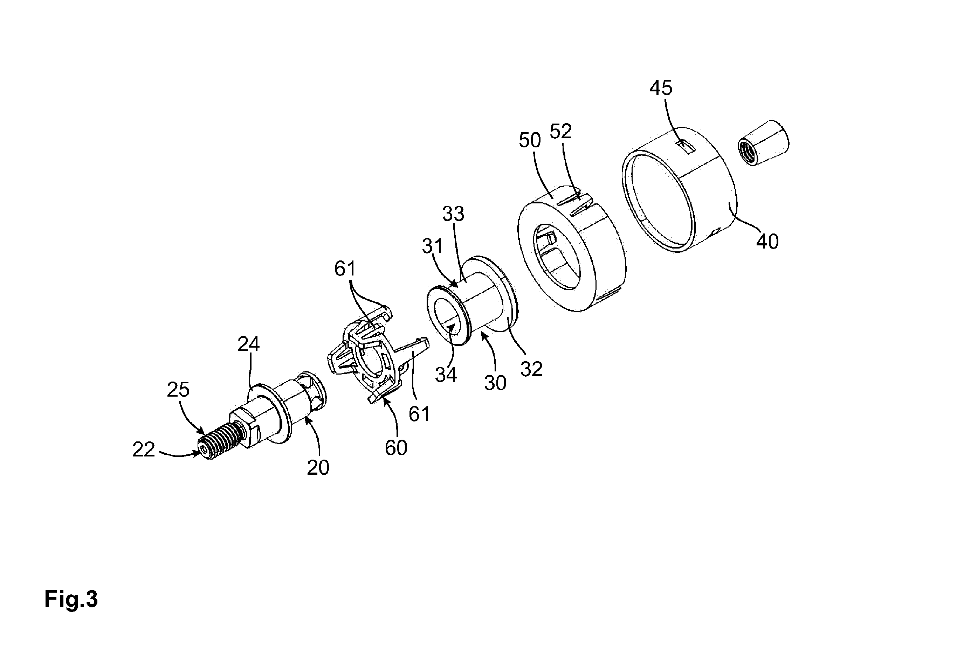

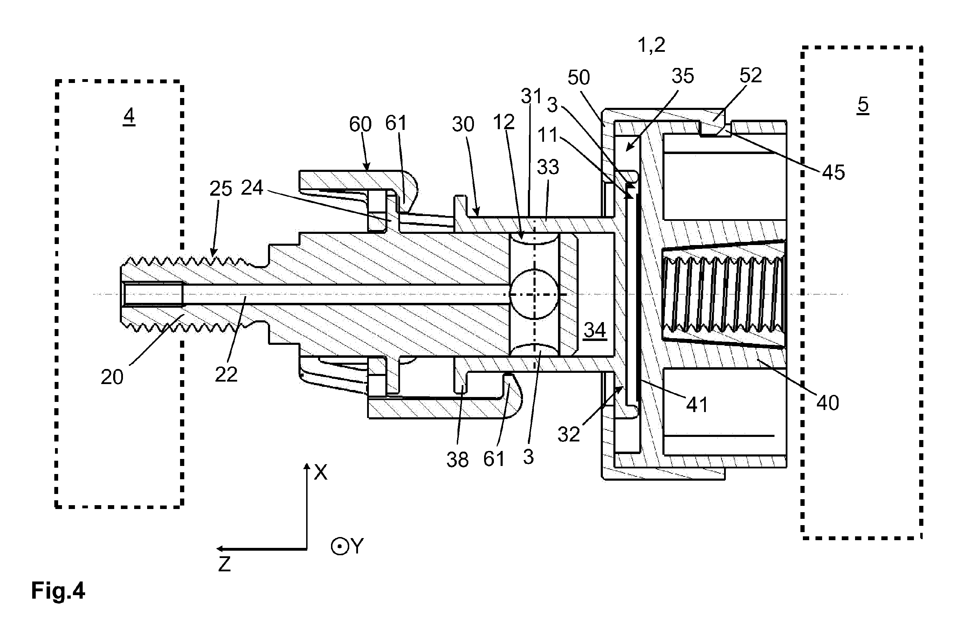

Figur 3 und Figur 4 zeigen eine weitere Alternative der erfindungsgemäßen Vorrichtung, die im Wesentlichen den Ausführungsbeispielen gemäß Figur 1 und Figur 2 entspricht. Einer der Unterschiede zu den Ausführungsbeispielen gemäß Figur 1 und Figur 2 ist, dass das Kappenelement 50 über eine Rastverbindung am Basiselement 40 gehalten ist. Das Kappenelement 50 weist hierbei eine Rastnase 52 auf, die in einer entsprechenden Rastöffnung 45 des Basiselementes 40 gehalten ist. Zudem ist ein Sicherungselement 60 vorgesehen, um ein komplettes Herausziehen oder Herausfallen des Anschlusselementes 20 aus dem Innenraum 34 des Zwischenelementes 30 zu verhindern. Das Sicherungselement 60 weist Haken 61 auf, die an einem Kragenelement 38 des Zwischenelementes 30 als auch an einem Kragenelement 24 des Anschlusselementes 20 wirken können. Wird das Anschlusselement 20 gemäß Figur 4 aus dem Zwischenelement 30 gezogen, kontaktiert nach einem definierten Verfahrweg des Anschlusselementes 20 (nach links) der Haken 61 das Kragenelement 38, so dass ein weiteres Herausziehen des Anschlusselementes 20 aus dem Zwischenelement 30 verhindert ist.

Gemäß Figur 3 und Figur 4 erfolgt ein Energieeintrag in die erste Kammer 11 und die zweite Kammer 12, so dass ein Zustandswechsel des Klebemediums 3 erfolgt, nachdem eine entsprechende Justierung des Bauteils 4 am Karosserieteil 5 erfolgt ist.

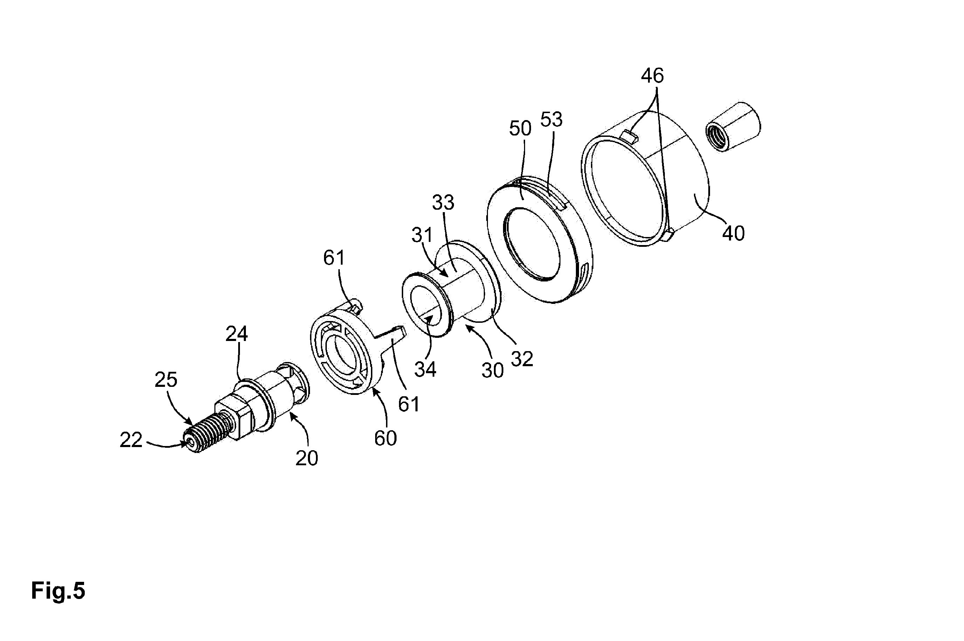

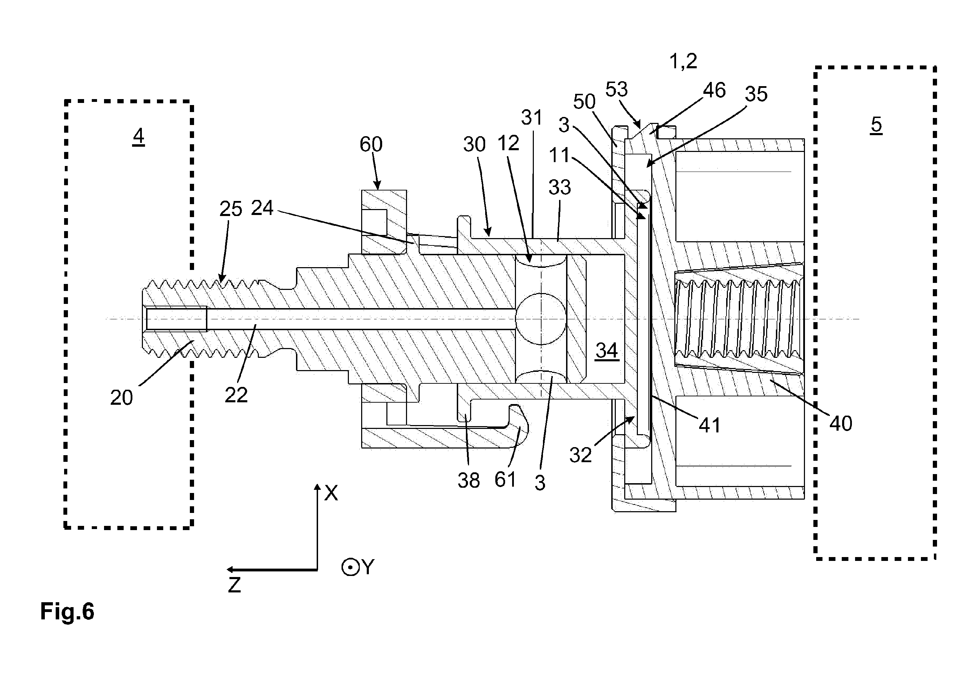

Das Ausführungsbeispiel gemäß Figur 5 und Figur 6 entspricht im Wesentlichen dem Ausführungsbeispiel gemäß Figur 3 und Figur 4. Das Kappenelement 50 wird ebenfalls gemäß Figur 5 und Figur 6 über eine Rastverbindung am Basiselement 40 befestigt. Unterschiedlich ist jedoch, dass das Kappenelement 50 eine Rastöffnung 53 aufweist, insbesondere mehrere Rastöffnungen 53 umfasst, in die jeweils eine Rastnase 46 des Basiselementes 40 formschlüssig hineinragt. Die übrigen Ausgestaltungen der erfindungsgemäßen Vorrichtung gemäß Figur 5 und Figur 6 entsprechen im Wesentlichen dem Ausführungsbeispiel gemäß Figur 3 und Figur 4.

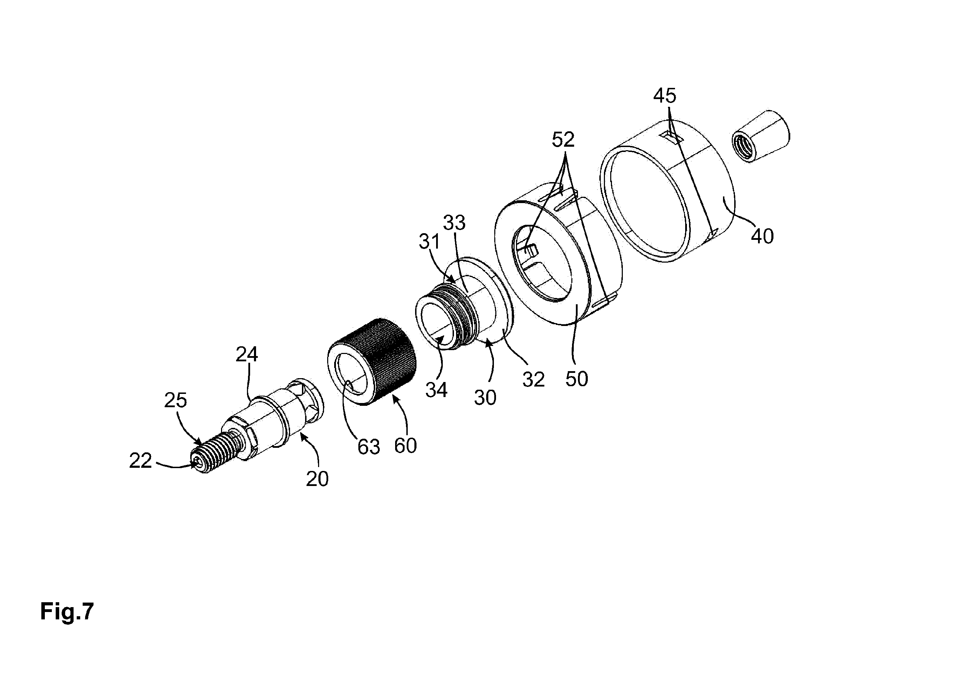

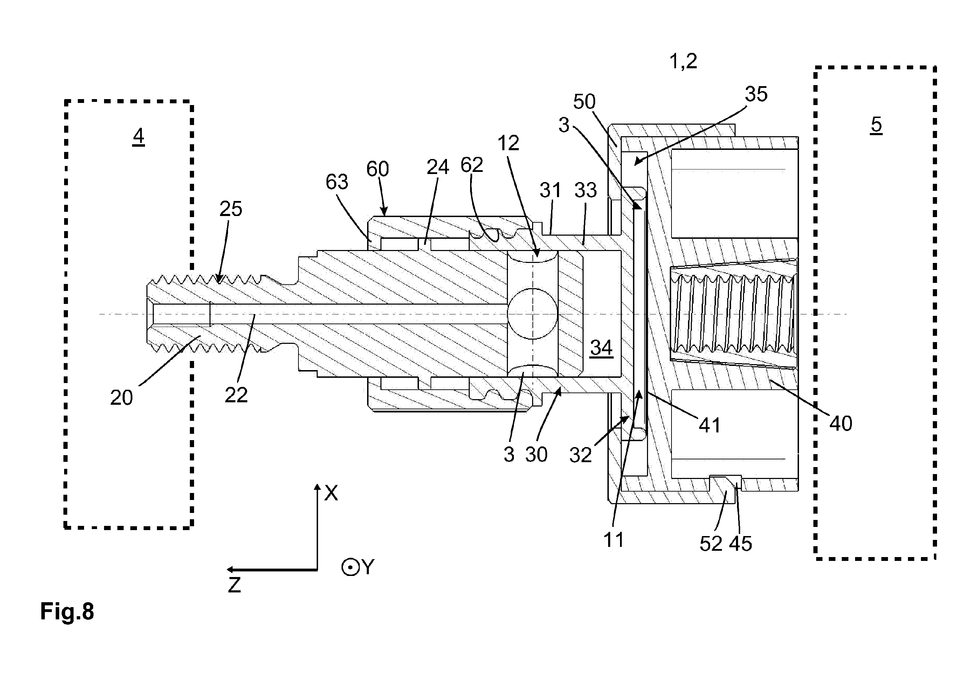

Das Ausführungsbeispiel gemäß Figur 7 und Figur 8 entspricht im Wesentlichen dem Ausführungsbeispiel gemäß Figur 3 und Figur 4. Ein Unterschied besteht lediglich darin, dass das Sicherungselement 60 über ein Gewinde 62 am Zwischenelement 30 aufgeschraubt ist. Das Sicherungselement 60 weist ein Kragen 63 auf, der wirkungsvoll verhindert, dass das Anschlusselement 20 aus dem ersten Innenraum 34 herausgezogen werden kann. Die absolute Endstellung des Anschlusselementes 20 ist dort, wenn das Kragenelement 24 des Anschlusselementes 20 gegen den Kragen 63 des Sicherungselementes 60 anliegt.

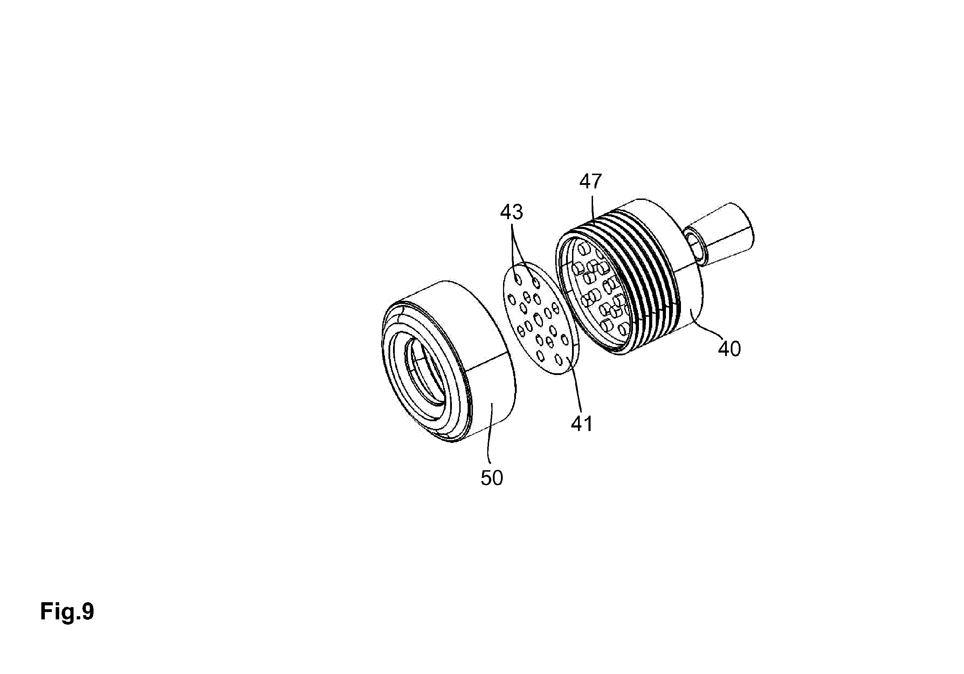

In Figur 9 ist das Basiselement 40 mit einem Gewinde 47 gezeigt, auf das das Kappenelement 50 aufgeschraubt werden kann. Das Basiselement 40 weist im zweiten Innenraum 35 im Bereich der ersten Kammer 11 einen metallischen Wärmewiderstand 41 auf, der eine Vielzahl an Öffnungen 43 aufweist. In diese Öffnungen 43 ragt das Material des Basiselementes 40 hinein, wodurch eine zuverlässige Befestigung der metallischen Platte 41 in der ersten Kammer 11 gewährleistet ist.

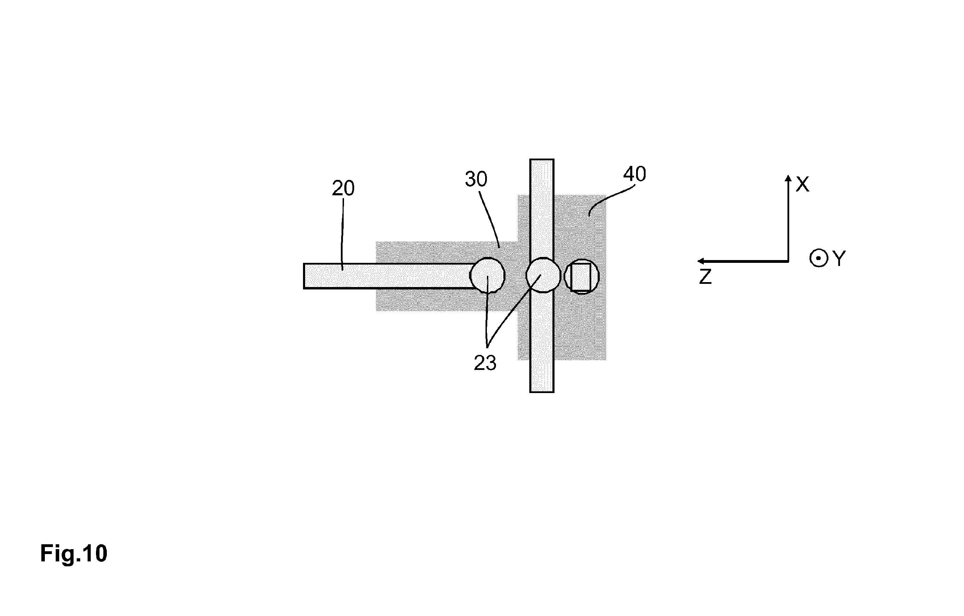

Figur 10 zeigt schematisch, dass das Anschlusselement 20 nicht nur in Z-Richtung bewegt werden kann, um eine Justierung des Bauteils 4 durchführen zu können. Innerhalb des ersten Innenraumes 34 kann ein Gelenk 23 angeordnet sein, wodurch im ersten Zustand 1 des Klebemediums 3 eine geringe Nachjustierung in die X-Richtung und die Y-Richtung möglich ist. Ein derartiges Gelenk 23 kann zusätzlich und/oder alternativ am Zwischenelement 30 vorgesehen sein.

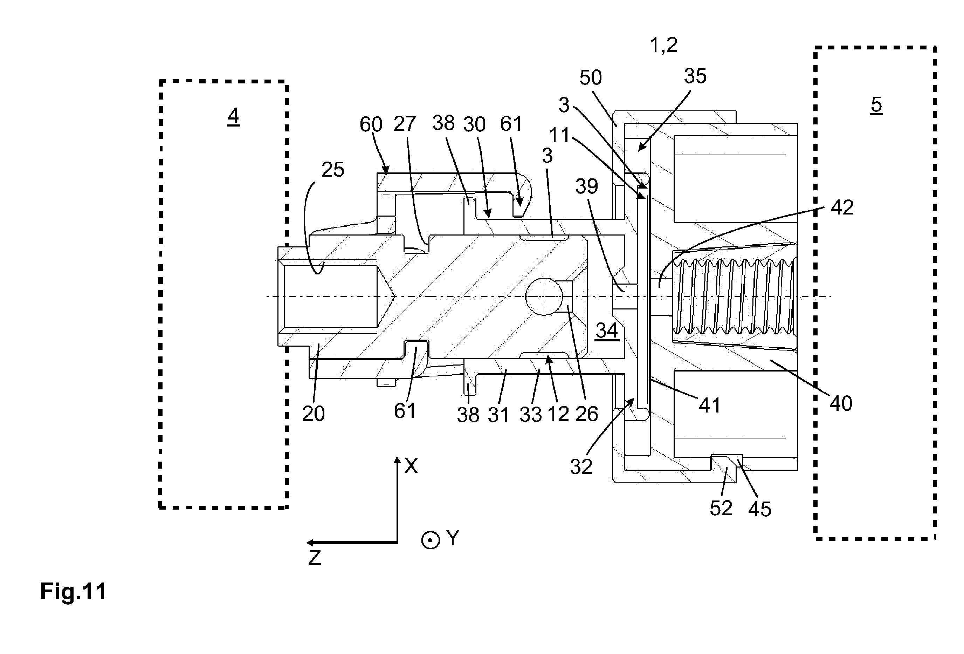

In Figur 11 ist ein weiteres Ausführungsbeispiel gezeigt, das im Wesentlichen dem Ausführungsbeispiel gemäß Figur 4 entspricht. Einer der Unterschiede des Ausführungsbeispiels gemäß Figur 11 ist, dass das Sicherungselement 60 mit seinem Haken 61 sowohl am Kragenelement 38 des Zwischenelementes 30 als auch mit seinem Haken 61 in eine Nut 27 des Anschlusselementes 20 greift. Der Haken 61 ist hierbei in der Nut 27 eingeklipst. Gemäß dieses Ausführungsbeispiels aus Figur 11 erfolgt die Befüllung lediglich über das Basiselement 40. Hierbei weist das Basiselement 40 den Kanal 42 auf, der in den zweiten Innenraum 35 und in der ersten Klammer 11 mündet. Zudem ist die Seite 32, die sich im zweiten Innenraum 35 befindet, mit einem Kanal 39 ausgeführt. Der Kanal 39 mündet zum Einen in dem ersten Innenraum 34 und dem zweiten Innenraum 35. Das Anschlusselement 20, welches sich innerhalb der Wandung 33 des Zwischenelementes 30 befindet, weist einen Zentrierkanal 26 auf, der den ersten Innenraum 34 mit der zweiten Kammer 12 verbindet. Wenn nun eine Befüllung beider Kammern 11, 12 stattfindet, durchdringt das Klebemedium 3 zunächst den Kanal 42, gelangt in die erste Kammer 11, verläuft durch den Kanal 39, gelangt in den ersten Innenraum 34, wobei anschließend das Klebemedium 3 in die trichterförmige Öffnung des Anschlusselementes 20 fließt und in den Zentrierkanal 26 gelangt und schließlich die zweiten Kammer 12 erreicht. Anstelle eines Außengewindes 25 gemäß der Ausführungsbeispiele in Figur 1 bis Figur 8 ist ein Innengewinde 25 denkbar, an dem das Bauteil 4 befestigbar ist.

Bezogen auf sämtliche Ausführungsbeispiele gemäß Figur 1 bis Figur 11 kann das Bauteil 4 einstückig und/oder materialeinheitlich mit dem Anschlusselement 20 verbunden sein. Ebenfalls ist denkbar, dass das Basiselement 40 einstückig und/oder materialeinheitlich mit dem Karosserieteil 5 verbunden ist. Gemäß der gezeigten Ausführungsbeispiele erfolgt eine Befestigung des Bauteils 4 über ein Gewinde 25 mit dem Anschlusselement 20. Das Klebemedium 3 kann auf unterschiedliche Weise über externe Mittel angesprochen werden, um einen Zustandswechsel entstehen zu lassen. Dies kann beispielsweise durch Temperaturerhöhung, Zutritt von Licht, Schall, Luftfeuchtigkeit oder Ausschluss von Luftsauerstoff erfolgen. Ferner kann über Induktion Wärme in die erste und/oder in die zweite Kammer 11, 12 eingebracht werden. Der Einsatz von Heizspiralen im Bereich der ersten Kammer 11 und der zweiten Kammer 12 ist ebenfalls denkbar, um zielgerichtet Wärme in das Klebemedium 3 einzubringen. Bei dem zu befestigenden Bauteil 4 kann es sich beispielsweise um eine Leuchteinheit, ein Frontendmodul handeln, welches am Karosserieteil 5 zu befestigen ist. Die erfindungsgemäße Vorrichtung ermöglicht eine einfache Justierung des Bauteils 4 an seinen anliegenden Karosserieteilen, wie Kotflügel, Stoßfängeraußenkante, Motorhaube etc. Das Bauteil 4 kann selbstverständlich jegliches Bauteil am Kraftfahrzeug sein, welches innerhalb oder außerhalb des Kraftfahrzeuges zu befestigen ist und eine Justierung aufgrund Fertigungstoleranzen notwendig ist.

### Bezugszeichenliste

- 1: erster Zustand
- 2: zweiter Zustand
- 3: Klebemedium
- 4: Bauteil, Scheinwerfer
- 5: Karosserieteil
- 6: Heizdraht

- 11: erste Kammer
- 12: zweite Kammer

- 20: Anschlusselement
- 22: Kanal
- 23: Gelenkmittel
- 24: Kragenelement
- 25: Gewinde
- 26: Zentrierkanal
- 27: Nut

- 30: Zwischenelement
- 31: Seite zugewandt zu 20
- 32: Seite zugewandt zu 40
- 33: Wandung
- 34: erster Innenraum
- 35: zweiter Innenraum
- 36: Dichtung
- 37: Heizspirale
- 38: Kragenelement
- 39: Kanal
- 40: Basiselement
- 41: Wärmewiderstand
- 42: Kanal
- 43: Öffnung
- 44: Heizspirale
- 45: Rastöffnung
- 46: Rastnase
- 47: Gewinde

- 50: Kappenelement
- 51: Gewinde
- 52: Rastnase
- 53: Rastöffnung

- 60: Sicherungselement
- 61: Haken
- 62: Gewinde
- 63: Kragen

- 70: Verbindungsstück

- X: erste Richtung
- Y: zweite Richtung
- Z: dritte Richtung

## Patentansprüche

1. Vorrichtung zur Befestigung eines Bauteils (4) an ein Karosserieteil (5) eines Kraftfahrzeuges, mit
mehreren Fügepartnern (20, 30, 40), die über ein Klebemedium (3) miteinander befestigt sind, wobei das Klebemedium (3) in mindestens zwei Zustände (1, 2) bringbar ist,
in einem ersten Zustand (1) das Klebemedium (3) eine Justierung des Bauteils (4) am Karosserieteil (5) zulässt, und
über Mittel der Wechsel vom ersten Zustand (1) in einen zweiten Zustand (2) aktivierbar ist, wobei im zweiten Zustand (2) das Klebemedium (3) ausgehärtet ist, wodurch eine Fixierung des Bauteils (4) am Karosserieteil (5) erzielbar ist,
**dadurch gekennzeichnet,**
**dass** mindestens zwei voneinander unabhängige Kammern (11, 12) vorgesehen sind, in denen das Klebemedium (3) sich befindet, wobei eine erste Kammer (11) zur Justierung des Bauteils (4) in mindestens eine erste Richtung (X, Y) dient und eine zweite Kammer (12) zur Justierung des Bauteils (4) in mindestens eine weitere Richtung (Z), die sich von der ersten Richtung (X, Y) unterscheidet, dient.

2. Vorrichtung nach Anspruch 1,
**dadurch gekennzeichnet,**
**dass** die erste Kammer (11) zur Justierung des Bauteils (4) in eine erste Richtung (X) und eine zweite Richtung (Y) dient.

3. Vorrichtung nach Anspruch 1 oder 2,
**dadurch gekennzeichnet,**
**dass** die Fügepartner (20, 30, 40) aus einem Basiselement (40), einem Zwischenelement (30) und einem Anschlusselement (20) sich zusammensetzen, wobei das Anschlusselement (20) das Bauteil (4) aufweist,
die erste Kammer (11) zumindest teilweise durch das Zwischenelement (30) und das Basiselement (40) begrenzt ist,
die zweite Kammer (12) durch das Anschlusselement (20) und das Zwischenelement (30) begrenzt ist.

4. Vorrichtung nach Anspruch 3,
**dadurch gekennzeichnet,**
**dass** das Zwischenelement (30) zumindest bereichsweise das Anschlusselement (20) umfasst, insbesondere das Zwischenelement (30) an seiner dem Anschlusselement (20) zugewandten Seite (31) hülsenartig mit einer Wandung (33) und mit einem Innenraum (34) ausgeführt ist, in dem das Anschlusselement (20) im ersten Zustand (1) des Klebemediums (3) linear beweglich gelagert ist, insbesondere dass die zweite Kammer (12) durch die Wandung (33) des Zwischenelementes (30) und die Kontur des Anschlusselementes (20) bestimmt ist.

5. Vorrichtung nach Anspruch 3 oder 4,
**dadurch gekennzeichnet,**
**dass** das Zwischenelement (30) mit seiner dem Basiselement (40) zugewandten Seite (32) in einen zweiten Innenraum (35) ragt, in dem sich gleichzeitig die erste Kammer (11) befindet, insbesondere dass der zweite Innenraum (35) geschlossen ist und/oder das Zwischenelement (30) ein Kappenelement (50) aufweist, das am Basiselement (40) befestigt ist.

6. Vorrichtung nach einem der Ansprüche 3 bis 5,
**dadurch gekennzeichnet,**
**dass** das Anschlusselement (20) und/oder das Basiselement (40) und/oder das Zwischenelement (30) einen Kanal (22, 39, 42) aufweisen, durch den das Klebemedium (3) in die erste (11) und/oder die zweite Kammer (12) leitbar ist.

7. Vorrichtung nach einem der Ansprüche 3 bis 6,
**dadurch gekennzeichnet,**
**dass** das Zwischenelement (30) an seiner dem Basiselement (40) zugewandten Seite einen Kanal (39) aufweist, wobei insbesondere ein zweiter Kanal (42) am Basiselement (40) vorgesehen ist, so dass eine Befüllung der ersten Kammer (11) und der zweiten Kammer (12) über die Kanäle (42, 39) des Basiselementes (40) und des Zwischenelementes (30) erfolgt.

8. Vorrichtung nach einem der Ansprüche 3 bis 7,
**dadurch gekennzeichnet,**
**dass** das Kappenelement (50) und das Zwischenelement (30) ein monolithisches Bauteil bilden
und/oder das Bauteil (4) zur Befestigung an der Karosserie (5) und das Anschlusselement (20) ein monolithisches Bauteil bilden
und/oder das Basiselement (40) und die Karosserie (5) ein monolithisches Bauteil bilden und/oder die Fügepartner (20, 30, 40) derart ausgeführt sind, dass eine translatorische und eine rotatorische Bewegung des zu befestigenden Bauteils (4) im ersten Zustand (1) des Klebemediums (3) möglich ist.

9. Vorrichtung nach einem der vorhergehenden Ansprüche,
**dadurch gekennzeichnet,**
**dass** die Mittel externe Mittel, insbesondere Energie, bevorzugt Wärme, Strom, Induktion, Licht und/oder Schall sind.

10. Vorrichtung nach einem der vorhergehenden Ansprüche,
**dadurch gekennzeichnet,**
**dass** die erste (11) und/oder die zweite Kammer (12) mindestens einen Wärmewiderstand (41) aufweist.

11. Vorrichtung nach einem der Ansprüche 3 bis 10,
**dadurch gekennzeichnet,**
**dass** das Basiselement (40) und/oder die dem Basiselement (40) zugewandte Seite (32) des Zwischenelementes (30) einen metallischen Wärmewiderstand (41) aufweist, der insbesondere eine Vielzahl an Öffnungen (43) aufweist, in die zumindest bereichsweise das Material des Basiselementes (40) oder des Zwischenelementes (30) hineinragt, wodurch eine zuverlässige Befestigung des Wärmewiderstandes (41) in der ersten Kammer (11) gewährleistet ist.

12. Vorrichtung nach einem der Ansprüche 3 bis 11,
**dadurch gekennzeichnet,**
**dass** das Anschlusselement (20) über Gelenkmittel (23) am Zwischenelement (30) gelagert ist, wodurch im ersten Zustand (1) des Klebemediums (3) eine geringe Nachjustierung in die erste (X) und die zweite Richtung (Y) möglich ist.

13. Vorrichtung nach einem der Ansprüche 3 bis 12,
**dadurch gekennzeichnet,**
**dass** die dem Basiselement (40) zugewandte Seite (32) des Zwischenelementes (30) eine scheibenartige oder tellerartige Grundform aufweist, die einen geringen Abstand zum Basiselement (40) aufweist, wobei zwischen dem Basiselement (40) und der dem Basiselement (40) zugewandten Seite (32) des Zwischenelementes (30) die erste Kammer (11) sich befindet, wobei insbesondere die dem Basiselement (40) zugewandte Seite (32) des Zwischenelementes (30) mehrere Sektionen aufweist, in denen das Klebemedium (3) sich befindet.

14. Vorrichtung nach einem der Ansprüche 3-13,
**dadurch gekennzeichnet,**
**dass** ein Sicherungselement (60) vorgesehen ist, das derart am Zwischenelement (30) angeordnet ist, dass das Anschlusselement (20) verliersicher am Zwischenelement (30) gehalten ist und/oder dass über das Anschlusselement (20) und/oder das Zwischenelement (30) Wärme in das Klebemedium (3) leitbar ist und/oder dass das Anschlusselement (20) und/oder das Zwischenelement (30) aus einem Metall besteht.

15. Verfahren zur Befestigung eines Bauteils (4) an ein Karosserieteil (5) eines Kraftfahrzeuges, mit
mehreren Fügepartnern (20, 30, 40), die über ein Klebemedium (3) miteinander befestigt werden, wobei das Klebemedium (3) in mindestens zwei Zustände (1,2) bringbar ist, in einem ersten Zustand (1) das Klebemedium (3) eine Justierung des Bauteils (4) am Karosserieteil (5) zulässt, und
über Mittel der Wechsel vom ersten Zustand (1) in einen zweiten Zustand (2) aktiviert wird, wobei im zweiten Zustand (2) das Klebemedium (3) ausgehärtet ist, wodurch eine Fixierung des Bauteils (4) am Karosserieteil (5) erreicht ist,
**dadurch gekennzeichnet,**
**dass** mindestens zwei voneinander unabhängige Kammern (11, 12) vorgesehen sind, in die in einem ersten Schritt das Klebemedium (3) eingebracht wird,
in einem zweiten Schritt an einer ersten Kammer (11) eine Justierung des Bauteils (4) in eine erste (X) und eine zweite Richtung (Y) möglich ist und gleichzeitig an einer zweiten Kammer (12) eine Justierung des Bauteils (4) in eine weitere Richtung (Z) möglich ist,
in einem dritten Schritt über die Einbringung von externen Mitteln in die erste (11) und die zweite Kammer (12) der Wechsel von dem ersten Zustand (1) in den zweiten Zustand (2) aktiviert wird und ein Aushärtevorgang des Klebemediums (3) startet.

16. Verfahren nach Anspruch 15,
**dadurch gekennzeichnet,**
**dass** das Klebemedium (3) erst bei einer Temperatur T von T ≥ 120°C aushärtet.

17. Verfahren nach einem der vorhergehenden Ansprüche,
**dadurch gekennzeichnet,**
**dass** das Klebemedium (3) in der ersten Kammer (11) unterschiedlich zum Klebemedium (3) der zweiten Kammer (12) ist.

18. Verfahren zur Befestigung eines Bauteils (4) an ein Karosserieteil (5) eines Kraftfahrzeuges mit einer Vorrichtung gemäß einem der Ansprüche 1 bis 14.

## Claims

1. A device for fixing a component (4) on a bodywork section (5) of a motor vehicle, with
a plurality of mating parts (20, 30, 40) which are fixed to one another via an adhesive medium (3), wherein the adhesive medium (3) is able to be brought into at least two states (1, 2),
in a first state (1) the adhesive medium (3) permits an adjustment of the component (4) on the bodywork section (5), and
the change from the first state (1) into a second state (2) is able to be activated via means, wherein in the second state (2) the adhesive medium (3) is hardened, whereby a fixing of the component (4) on the bodywork section (5) is able to be achieved,
**characterized in that**
at least two chambers (11, 12) are provided which are independent of each other, in which the adhesive medium (3) is situated, wherein a first chamber (11) serves for the adjusting of the component (4) in at least a first direction (X, Y) and a second chamber (12) serves for the adjusting of the component (4) in at least a further direction (Z), which differs from the first direction (X, Y).

2. The device according to Claim 1,
**characterized in that**
the first chamber (11) serves for the adjusting of the component (4) in a first direction (X) and a second direction (Y).

3. The device according to Claim 1 or 2,
**characterized in that**
the mating parts (20, 30, 40) are composed of a base element (40), an intermediate element (30) and a connection element (20), wherein
the connection element (20) has the component (4),
the first chamber (11) is delimited at least partially by the intermediate element (30) and the base element (40),
the second chamber (12) is delimited by the connection element (20) and the intermediate element (30).

4. The device according to Claim 3,
**characterized in that**
the intermediate element (30) comprises at least in certain areas the connection element (20), in particular the intermediate element (30) is embodied on its side (31) facing the connection element (20) in a sleeve-like manner with a wall (33) and with an interior (34), in which the connection element (20) in the first state (1) of the adhesive medium (3) is mounted in a linearly movable manner, in particular that the second chamber (12) is determined by the wall (33) of the intermediate element (30) and the contour of the connection element (20).

5. The device according to Claim 3 or 4,
**characterized in that**
the intermediate element (30) projects with its side (32) facing the base element (40) into a second interior (35), in which at the same time the first chamber (11) is situated, in particular that the second interior (35) is closed and/or the intermediate element (30) has a cap element (50), which is fixed on the base element (40).

6. The device according to one of Claims 3 to 5,
**characterized in that**
the connection element (20) and/or the base element (40) and/or the intermediate element (30) have a duct (22, 39, 42), through which the adhesive medium (3) is able to be directed into the first (11) and/or the second chamber (12).

7. The device according to one of Claims 3 to 6,
**characterized in that**
the intermediate element (30) has a duct (39) on its side facing the base element (40), wherein in particular a second duct (42) is provided on the base element (40), so that a filling of the first chamber (11) and of the second chamber (12) takes place via the ducts (42, 39) of the base element (40) and of the intermediate element (30).

8. The device according to one of Claims 3 to 7,
**characterized in that**
the cap element (50) and the intermediate element (30) form a monolithic component
and/or the component (4) for fixing on the bodywork (5) and the connection element (20) form a monolithic component
and/or the base element (40) and the bodywork (5) form a monolithic component
and/or the mating parts (20, 30, 40) are embodied such that a translatory and a rotatory movement of the component (4) which is to be fixed is possible in the first state (1) of the adhesive medium (3).

9. The device according to one of the preceding claims,
**characterized in that**
the means are external means, in particular energy, preferably heat, current, induction, light and/or sound.

10. The device according to one of the preceding claims,
**characterized in that**
the first (11) and/or the second chamber (12) has at least one thermal resistance (41).

11. The device according to one of Claims 3 to 10,
**characterized in that**
the base element (40) and/or the side (32), facing the base element (40), of the intermediate element (30) has a metallic thermal resistance (41), which in particular has a plurality of openings (43), into which the material of the base element (40) or of the intermediate element (30) projects at least in certain areas, whereby a reliable fixing of the thermal resistance (41) in the first chamber (11) is ensured.

12. The device according to one of Claims 3 to 11,
**characterized in that**
the connection element (20) is mounted on the intermediate element (30) via articulation means (23), whereby in the first state (1) of the adhesive medium (3) a small readjustment in the first (X) and the second direction (Y) is possible.

13. The device according to one of Claims 3 to 12,
**characterized in that**
the side (32) of the intermediate element (30) facing the base element (40) has a disc-like or plate-like basic shape, which has a small distance from the base element (40), wherein the first chamber (11) is situated between the base element (40) and the side (32) of the intermediate element (30) facing the base element (40), wherein in particular the side (32) of the intermediate element (30) facing the base element (40) has a plurality of sections in which the adhesive medium (3) is situated.

14. The device according to one of Claims 3 to 13,
**characterized in that**
a retaining element (60) is provided, which is arranged on the intermediate element (30) such that the connection element (20) is held in a captive manner on the intermediate element (30) and/or that via the connection element (20) and/or the intermediate element (30) heat is able to be directed into the adhesive medium (3) and/or that the connection element (20) and/or the intermediate element (30) consists of a metal.

15. A method for fixing a component (4) on a bodywork section (5) of a motor vehicle, with
a plurality of mating parts (20, 30, 40), which are fixed to one another via an adhesive medium (3), wherein the adhesive medium (3) is able to be brought into at least two states (1, 2), in a first state (1) the adhesive medium (3) permits an adjustment of the component (4) on the bodywork section (5), and
the change from the first state (1) into a second state (2) is activated via means, wherein in the second state (2) the adhesive medium (3) is hardened, whereby a fixing of the component (4) on the bodywork section (5) is achieved, **characterized in that**
at least two chambers (11, 12) are provided which are independent of one another, into which the adhesive medium (3) is introduced in a first step,
in a second step at a first chamber (11) an adjustment of the component (4) into a first (X) and a second direction (Y) is possible and at the same time at a second chamber (12) an adjustment of the component (4) in a further direction (Z) is possible,
in a third state via the introduction of external means into the first (11) and the second chamber (12) the change from the first state (1) into the second state (2) is activated and a hardening process of the adhesive medium (3) is started.

16. The method according to Claim 15,
**characterized in that**
the adhesive medium (3) only hardens at a temperature T of T ≥ 120°C.

17. The method according to one of the preceding claims,
**characterized in that**
the adhesive medium (3) in the first chamber (11) is different to the adhesive medium (3) of the second chamber (12).

18. A method for fixing a component (4) on a bodywork section (5) of a motor vehicle with a device according to one of Claims 1 to 14.

## Revendications

1. Dispositif dévolu à la fixation d'un composant structurel (4) à une partie de carrosserie (5) d'un véhicule automobile, comprenant
plusieurs pièces (20, 30, 40) solidarisées par assemblage et fixées les unes aux autres par l'intermédiaire d'un agent d'adhérence (3), ledit agent d'adhérence (3) pouvant être amené à au moins deux états (1, 2),
l'agent d'adhérence (3) autorisant, dans un premier état (1), un ajustement du composant structurel (4) sur la partie de carrosserie (5), et
le passage dudit premier état (1) à un second état (2) pouvant être activé par l'intermédiaire de moyens, sachant que l'agent d'adhérence (3) est intégralement durci dans ledit second état (2), permettant ainsi d'obtenir un blocage à demeure dudit composant structurel (4) sur ladite partie de carrosserie (5),
**caractérisé par**
la présence d'au moins deux compartiments (11, 12) indépendants l'un de l'autre, dans lesquels se trouve l'agent d'adhérence (3), un premier compartiment (11) servant à ajuster le composant structurel (4) dans au moins une première direction (X, Y), et un second compartiment (12) servant à ajuster ledit composant structurel (4) dans au moins une direction supplémentaire (Z) différant de ladite première direction (X, Y).

2. Dispositif selon la revendication 1,
**caractérisé par le fait**
**que** le premier compartiment (11) sert à ajuster le composant structurel (4) dans une première direction (X) et dans une deuxième direction (Y).

3. Dispositif selon la revendication 1 ou 2,
**caractérisé par le fait**
**que** les pièces (20, 30, 40) solidarisées par assemblage se composent d'un élément de base (40), d'un élément intercalaire (30) et d'un élément de rattachement (20), sachant que
ledit élément de rattachement (20) présente le composant structurel (4),
le premier compartiment (11) est délimité, au moins en partie, par ledit élément intercalaire (30) et par ledit élément de base (40),
le second compartiment (12) est délimité par ledit élément de rattachement (20) et par ledit élément intercalaire (30).

4. Dispositif selon la revendication 3,
**caractérisé par le fait**
**que** l'élément intercalaire (30) enserre l'élément de rattachement (20), au moins par zones, ledit élément intercalaire (30) étant doté en particulier, sur son côté (31) tourné vers ledit élément de rattachement (20), d'une réalisation du type douille comprenant une paroi (33) et un espace intérieur (34) dans lequel ledit élément de rattachement (20) est monté avec mobilité linéaire dans le premier état (1) de l'agent d'adhérence (3) ; notamment par le fait que le second compartiment (12) est déterminé par ladite paroi (33) de l'élément intercalaire (30) et par le profil dudit élément de rattachement (20).

5. Dispositif selon la revendication 3 ou 4,
**caractérisé par le fait**
**que** l'élément intercalaire (30) dépasse, par son côté (32) tourné vers l'élément de base (40), dans un second espace intérieur (35) dans lequel le premier compartiment (11) est simultanément situé ; notamment par le fait que ledit second espace intérieur (35) est fermé, et/ou que ledit élément intercalaire (30) est muni d'un élément (50) de type capuchon qui est fixé à l'élément de base (40).

6. Dispositif selon l'une des revendications 3 à 5,
**caractérisé par le fait**
**que** l'élément de rattachement (20) et/ou l'élément de base (40) et/ou l'élément intercalaire (30) présente(nt) un canal (22, 39, 42) par l'intermédiaire duquel l'agent d'adhérence (3) peut être guidé pour pénétrer dans le(s) premier (11) et/ou second (12) compartiment(s).

7. Dispositif selon l'une des revendications 3 à 6,
**caractérisé par le fait**
**que** l'élément intercalaire (30) est pourvu d'un canal (39) sur son côté tourné vers l'élément de base (40), un second canal (42) étant notamment prévu dans ledit élément de base (40), de telle sorte qu'un emplissage du premier compartiment (11) et du second compartiment (12) s'opère par l'intermédiaire desdits canaux (42, 39) de l'élément de base (40) et de l'élément intercalaire (30).

8. Dispositif selon l'une des revendications 3 à 7,
**caractérisé par le fait**
**que** l'élément (50) de type capuchon, et l'élément intercalaire (30), forment une pièce constitutive monobloc
et/ou l'élément de rattachement (20), et le composant structurel (4) voué à la fixation à la
carrosserie (5), forment une pièce constitutive monobloc et/ou l'élément de base (40), et ladite carrosserie (5), forment une pièce constitutive monobloc
et/ou les pièces (20, 30, 40) solidarisées par assemblage sont réalisées de manière à permettre, dans le premier état (1) de l'agent d'adhérence (3), des mouvements translatoire et rotatoire dudit composant structurel (4) devant être fixé.

9. Dispositif selon l'une des revendications précédentes,
**caractérisé par le fait**
**que** les moyens sont des moyens extérieurs se présentant notamment comme une énergie, de préférence de la chaleur, du courant, une induction, de la lumière et/ou un son.

10. Dispositif selon l'une des revendications précédentes,
**caractérisé par le fait**
**que** te(s) premier (11) et/ou second (12) compartiment(s) présente(nt) au moins une résistance thermique (41).

11. Dispositif selon l'une des revendications 3 à 10,
**caractérisé par le fait**
**que** l'élément de base (40), et/ou le côté (32) de l'élément intercalaire (30) qui est tourné vers ledit élément de base (40), présente(nt) une résistance thermique métallique (41) percée, en particulier, d'une multiplicité d'orifices (43) dans lesquels le matériau dudit élément de base (40), ou dudit élément intercalaire (30), pénètre au moins par zones en garantissant, de la sorte, une fixation fiable de ladite résistance thermique (41) dans le premier compartiment (11).

12. Dispositif selon l'une des revendications 3 à 11,
**caractérisé par le fait**
**que** l'élément de rattachement (20) est monté sur l'élément intercalaire (30) par l'intermédiaire de moyens d'articulation (23) en permettant ainsi, dans le premier état (1) de l'agent d'adhérence (3), un léger réajustement dans les première (X) et deuxième (Y) directions.

13. Dispositif selon l'une des revendications 3 à 12,
**caractérisé par le fait**
**que** le côté (32) de l'élément intercalaire (30), qui est tourné vers l'élément de base (40), est pourvu d'une configuration fondamentale du type disque ou rondelle présentant une faible distance par rapport audit élément de base (40), le premier compartiment (11) étant situé entre l'élément de base (40) et ledit côté (32) de l'élément intercalaire (30) qui est tourné vers ledit élément de base (40), sachant notamment que ledit côté (32) dudit élément intercalaire (30), qui est tourné vers ledit élément de base (40), comporte plusieurs tronçons dans lesquels se trouve l'agent d'adhérence (3).

14. Dispositif selon l'une des revendications 3-13,
**caractérisé par**
la présence d'un élément d'arrêt (60) occupant, sur l'élément intercalaire (30), un emplacement ayant pour effet de retenir l'élément de rattachement (20) de manière imperdable sur ledit élément intercalaire (30) ; et/ou par le fait que de la chaleur peut être introduite dans l'agent d'adhérence (3) par l'intermédiaire dudit élément de rattachement (20) et/ou dudit élément intercalaire (30) ; et/ou par le fait que ledit élément de rattachement (20) et/ou ledit élément intercalaire (30) consiste(nt) en un métal.

15. Procédé dévolu à la fixation d'un composant structurel (4) à une partie de carrosserie (5) d'un véhicule automobile, comprenant
plusieurs pièces (20, 30, 40) solidarisées par assemblage et fixées les unes aux autres par l'intermédiaire d'un agent d'adhérence (3), ledit agent d'adhérence (3) pouvant être amené à au moins deux états (1, 2), l'agent d'adhérence (3) autorisant, dans un premier état (1), un ajustement du composant structurel (4) sur la partie de carrosserie (5), et
le passage dudit premier état (1) à un second état (2) étant activé par l'intermédiaire de moyens, sachant que l'agent d'adhérence (3) est intégralement durci dans ledit second état (2), procurant ainsi un blocage à demeure dudit composant structurel (4) sur ladite partie de carrosserie (5),
**caractérisé par**
la présence d'au moins deux compartiments (11, 12) indépendants l'un de l'autre, dans lesquels l'agent d'adhérence (3) est déversé au cours d'une première étape, sachant que,
lors d'une deuxième étape, un ajustement du composant structurel (4) est possible dans des première (X) et deuxième (Y) directions, au niveau d'un premier compartiment (11), et un ajustement dudit composant structurel (4) est simultanément possible dans une direction supplémentaire (Z), au niveau d'un second compartiment (12), et que
durant une troisième étape, le passage du premier état (1) au second état (2) est activé par introduction de moyens extérieurs dans lesdits premier (11) et second (12) compartiments, un processus de durcissement intégral dudit agent d'adhérence (3) débutant alors.

16. Procédé selon la revendication 15,
**caractérisé par le fait que**
l'agent d'adhérence (3) ne durcit intégralement qu'à une température T, T étant ≥ 120 °C.

17. Procédé selon l'une des revendications précédentes,
**caractérisé par le fait que**
l'agent d'adhérence (3) situé dans le premier compartiment (11) est différent de l'agent d'adhérence (3) situé dans le second compartiment (12).

18. Procédé dévolu à la fixation d'un composant structurel (4) à une partie de carrosserie (5) d'un véhicule automobile, à l'aide d'un dispositif conforme à l'une des revendications 1 à 14.
